Europäisches Patentamt

(19) European Patent Office

Office européen des brevets

(11) Publication number: **0 079 664**
**B1**

(12) **EUROPEAN PATENT SPECIFICATION**

(45) Date of publication of patent specification: **04.06.86**

(21) Application number: **82201463.5**

(22) Date of filing: **18.11.82**

(51) Int. Cl.⁴: **B 01 D 3/32, B 01 D 53/18**

(54) **Liquid flow collector for chemical process tower.**

(30) Priority: **18.11.81 US 322504**

(43) Date of publication of application:
**25.05.83 Bulletin 83/21**

(45) Publication of the grant of the patent:
**04.06.86 Bulletin 86/23**

(84) Designated Contracting States:
**BE CH DE FR GB IT LI NL**

(56) References cited:
**DE-A-2 049 364**
**DE-A-2 049 558**
**DE-B-1 066 992**
**DE-C- 696 231**
**FR-A-1 557 264**
**FR-A-2 474 887**
**US-A-2 889 018**
**US-A-4 075 298**

(73) Proprietor: **THE DOW CHEMICAL COMPANY**
**2030 Dow Center Abbott Road P.O. Box 1967**
**Midland, MI 48640 (US)**

(72) Inventor: **Harper, Stephen Mark**
**123 Spanish Moss**
**Lake Jackson Texas 77566 (US)**

(74) Representative: **Urbanus, Henricus Maria, Ir.**
**et al**
**c/o Vereenigde Octrooibureaux Nieuwe**
**Parklaan 107**
**NL-2587 BP 's-Gravenhage (NL)**

## Description

This invention relates to a device used in chemical process towers or columns to collect liquid trickling down the interior wall of the tower and for directing it away from the wall into some type of tower internal. Examples of such towers or columns are distillation towers, absorption towers, and extraction towers. Examples of tower internals are liquid distributors, liquid redistributors, and liquid side draw collectors. Most chemical process columns and towers are cylindrical in shape and stand in an upright position.

Often within such towers there is liquid flowing downwardly, and it is usually highly desirable to have this liquid distributed in a uniform pattern across a given horizontal cross-sectional surface of the tower. However, it is known among those skilled in the art that the downflowing liquid migrates toward the internal side walls of the tower to which it adheres and continues its downward flow. Thus the further down the liquid flows in a tower in which this migration is unchecked, the more liquid there is flowing downwardly along the tower walls and the less uniform the distribution of this liquid across a horizontal cross-sectional surface. This problem has been found to be particularly acute in instances where the downward liquid flow is at very low flowrates; e.g., less than about 40 liter per minute per square meter taken across a horizontal cross-sectional surface of the tower.

The prior art teaches many tower internals to redirect and/or collect this liquid flowing downwardly along the internal tower wall, but they all suffer from the same fundamental problem. This problem is that although the towers are specified as being cylindrical with a given internal diameter, and accordingly the tower internal is designed to fit them and are specified to have the same cylindrical diameter, the tower internal never presents a true geometric cylindrical surface. In their construction, small aberrations will appear in these towers which prevent them from being perfectly round. This has long been known by those working with such towers as is manifest by the various means and methods used for correcting these aberrations.

The means for correcting aberrations have centered principally around two approaches, one being to weld or bolt the tower internal in place and then running a weld bead between the outer peripheral surface of the internal and the inner peripheral surface of the tower wall to form a leak-proof seal therebetween. Of course, removal of the welded internal from the tower is a very tedious task for those who have to enter into the tower to make repairs.

The other principal approach used to try to provide leak proof seals has been to provide gasketing materials between the out-of-round tower internal and the tower wall. But even these gasket sealing procedures allow for some leakage to occur down the tower wall which is especially noticeable at very low liquid flowrates when such flow rates are desired to be maintained at a uniform distribution across the towers, or when the liquid is desired to be removed from the tower at some level within the tower.

These shortcomings and others have been overcome by the present invention. This invention is a liquid wall flow collector which is easy to install and easy to remove from the tower for maintenance of the tower internal into which it is directing the wall liquid. It provides an excellent seal to the tower wall whether the interior of the tower wall is prefectly round or not. It provides its own friction joint against the tower wall to provide its own support within the tower without requiring the presence of bolting or welding to the tower wall. Its position within the tower relative to the tower internal can be easily adjusted.

These advantages and others can be observed in the further description of the invention.

The present invention resides in an easily installable and removable liquid wall flow collector for use in a chemical process tower, wherein the tower liquid adheres to and flows down the inside of the tower's side walls but wherein it is desired to direct this liquid away from the tower side walls toward the center of the tower at least at some level in the tower, the interior of the tower's side walls at this level having a horizontal cross-section which is substantially circular in shape. The liquid wall flow collector according to the invention comprises a plurality of annular segments which are adjustably connected together at their ends in such a fashion as to form a horizontally-oriented segmented ring with small gaps existing between the ends of near abutting, adjacent annular segments. The ring is located within the tower at the tower level where it is desired to direct liquid flowing down the tower wall away from the tower wall. The annular segments are flexible with respect to the tower wall and have a radius of curvature which is less than the radius of a circle circumscribing the collector and corresponding to the average radius of curvature of the interior wall surface of a tower at that tower level where the flow of liquid along the wall is to be directed away from the wall so that the ring may be easily assembled within the tower with the attaching means being such that the segments may be disconnected from each other for ease of passage in and out of said tower. A ring diameter adjusting means is provided for connecting two adjacent flexible annular segments for spreading the flexible annular segments apart to expand the diameter of the ring formed by these segments sufficiently so that these segments are pressed against the tower wall internal peripheral surface at the tower level where the wall flow liquid is desired to be diverted until the annular segments sufficiently conform to the tower wall surface to form a leak-proof seal between the annular segments and the internal tower wall surface of the tower wall and also to form a friction joint between the segments and the tower wall surface which is capable of supporting the liquid wall flow collector in the tower. A lip is sealably and permanently attached to each of the annular segments, each lip extending radially inwardly from its corresponding annular segment at an angle from a vertical direction for a sufficient distance to divert liquid flowing down the tower wall to the desired area with the tower. In order to prevent liquid flow along the tower wall between the annular sections, bridging lip sections are provided between the annular sections spanning the gaps therebetween when they are expanded apart in a tower.

The invention thus resides in a collector for use in a chemical process tower, comprising a plurality of annular segments which are adjustably connected together at their ends to form a horizontally-oriented segmented ring with gaps between the ends of adjacent annular segments, said annular segments being flexible with respect to said tower wall and having a radius of curvature which is less than the radius of a circle circumscribing the collector; adjusting means connecting two adjacent annular segments for spreading said annular segments apart to expand the diameter of the ring formed by the segments sufficiently to form a seal between said annular segments and the internal surface of the tower wall, and a lip on each of said annular segments extending radially inwardly from the annular segment at an angle from a vertical direction and for a sufficient distance to divert liquid flowing down the tower wall to a desired area within the tower and a plurality of bridging lip sections being provided for preventing leakage of liquid down a tower wall through the gaps between the annular sections when they are expanded apart in a tower.

A better appreciation of the invention may be had by reference to the drawings wherein:

Fig. 1 is an elevational cross-sectional view of a chemical process tower containing a liquid flow collector.

Fig. 2 is a detail top view of the collector as seen along line 2—2 of Fig. 1.

Fig. 3 is a sectional side view of the collector shown in Figs. 1 and 2 as seen along line 3—3 in Fig. 2.

Fig. 4 is a fragmentary sectional side view of the collector taken along line 5—5 in Fig. 3 but not showing the bolts and nuts.

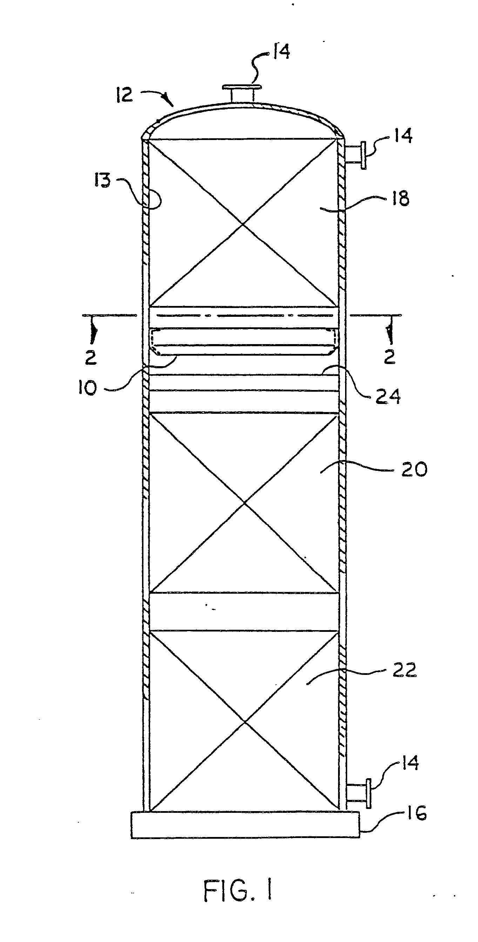

Referring to Fig. 1, a liquid flow collector 10 is shown installed in a chemical process tower 12. Tower 12 preferably is a typical cylindrically shaped tower used for various purposes in the chemical industry. Tower 12 is provided with an inlet and an outlet conduit 14 and is positioned on a base 16.

Inside of tower 12 are three regions 18, 20 and 22 in which regions 18 and 20 are located above and below flow collector 10, respectively. For purposes of illustration it is convenient to let regions 18 and 20 represent a tower section in which reflux distillation is being carried out in a bed of column packing wherein liquid is flowing downwardly while gases are rising upwardly, and wherein it is desired to maintain as uniform a distribution of the liquid in the vapor as possible with respect to any given height in the tower 12.

It is well known that such downwardly flowing liquid tends to migrate toward and accumulate on the interior of the tower wall as it flows downwardly through the tower packing. The liquid which reaches the tower wall tends to adhere thereto in increasing amounts as it flows down the tower. Of course, this liquid accumulation may not be significant when large volumes of liquid flow are involved, but when small liquid flow rates are involved (less than about 40 liter per minute per tower horizontal square meter), this accumulation is known to significantly upset the desired performance of the tower by causing a significant decrease in the amount of liquid within the tower packing beds wherein intimate contact with the rising gases is desired.

To rectify this particular problem of liquid distribution, many types of liquid distributors have been developed such as redistributor 24 shown in Fig. 1. But whether it be with distributors or other tower internal, the problem of clearing the wall of liquid in an easy manner has persisted.

Irregularities in the tower wall are compensated for by the manufacturers of tower internals by including so called wall wipers whose purpose is to divert liquid flowing down the wall away from the wall. Such wipers are often welded to the tower wall or are sealed by gaskets to the tower wall. The tower internal and wall wipers are usually supported by bolts or spot welds. But gaskets still leak and the tower internal still need to be supported by bolts or welds. The flow collector 10 of the present invention not only provides superior sealing by employing flexible materials which are forced to conform to the shape of the tower wall, but it also simultaneously provides a support means for itself which further allows the collector to be easily installed and removed without the necessity of welding and/or bolting it to tower 12.

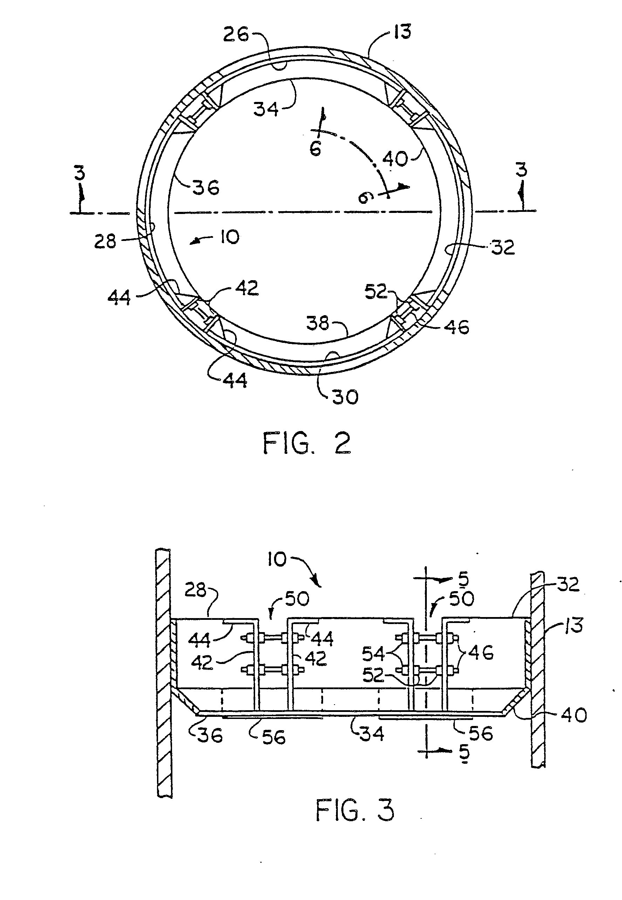

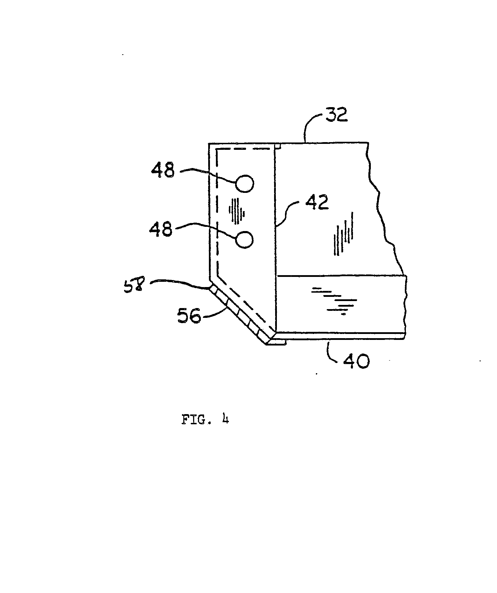

A more detailed view of flow collector 10 can be obtained by reference to Figs. 2—4 wherein four annular segments 26, 28, 30 and 32 are shown connected together in the form of a horizontally-oriented segmented ring with gaps located between the ends of the segments.

Welded to the bottom of each annular segment is a lip 34, 36, 38 and 40 which extends radially inwardly from the tower wall at an angle from the vertical position. The angle is not critical but an angle of 45° from the horizontal is preferred. Each lip is of the same arcuate length as its corresponding annular segment and is attached to its segment so that its two ends are co-terminous with the ends of the respective annular segment. Each annular segment and its respective lip have a radius of curvature which is slightly less than the radius of curvature of the average radius of the inner periphery of the tower wall 13.

The annular segments and their respective lips are made of a material which is sufficiently rigid to substantially maintain its design structure within tower 12, but yet it is sufficiently flexible with respect to tower wall 13 to conform to the out-of-round shape or irregularities of the tower wall 13. For example if tower wall 13 is made of 0,635 cm stainless steel, and if the annular segments and lips are made of stainless steel sheets having a 0,16 cm thickness these sheets are considered flexible with respect to the tower wall because they can be readily forced to conform to the shape of the tower wall sufficiently to form a leak-proof seal between themselves and the tower wall.

The radius of curvature of the annular segments is preferably not less than about 75% of the radius of a circle circumscribing the collector and corresponding to the average section of the interior wall of a tower. In unstressed condition of the segments said percentage is not less than about 90% and preferably not less than 94%.

The annular segments are flexed apart or forced to conform to the tower wall by a ring diameter adjusting means provided at the end of each annular segment and lip. The adjusting means comprises a vertical bolt attachment plate 42 and a horizontal reinforcing plate 44. Bolts 46 pass through holes 48 in bolt attachment plates 42. As can be seen in Figs. 2 and 3, there exists a gap 50 between the near abutting ends of adjacent annular segments. The bolts 46 are provided with spreading nuts 42 and locking nuts 54.

When the annular segments are assembled within the tower 12, they are spread apart by screw threading the spreading nuts 52 toward the ends of the bolts 46 whereby they will push the plates 42 apart. These nuts 52 are screw threaded outwardly until the annular segments are forced to conform to the shape of the internal periphery of tower wall 13 in a surface-to-surface, leak-proof seal as well as a frictional engagement capable of supporting the collector 10 within the tower 12. Lock-nuts 54 are added to prevent the spreading nuts 52 from backing off.

To complete the seal around the complete internal periphery of the tower wall 13, a bridging lip section 56 is provided to bridge and seal each gap 50. The bridging sections 56 are made of, for example, a stainless steel plate and formed as an annular arc of the same radius of curvature and width as the lips. In fact, the bridging sections 56 are extensions of the lips except that they are not in the same plane as the lips so that they can slide past the lips when collector 10 is installed in tower 12.

With reference to Fig. 3, the bridging section 56 is seen to bridge the gaps 50 between the annular segments and their respective lips. It matters not to which of two lips a bridging section 56 is fixedly attached, but it must be fixedly attached to one of the abutting lips so that one end of the bridging section 56 can slide past one of the lips when the annular sections are spread apart by an outward screw threading of nuts 52. When the bridging section 56 is welded to the bottom of a lip, an outer edge 58 lies in the same circumference as do the outer rims of the annular segments. Thus, a ring of uniform outside diameter is formed by the lip section 56 and the annular segments. When the annular segments are spread apart, they along with the outer rims 58 of lip sections 56, form a leak-proof seal with the internal periphery of tower wall 13.

In operation, liquid flowing down tower wall 13 above collector 10 is stopped from further downward flow by the annular segments 26, 28, 30 and 32 and lip sections 56, and is then directed into redistributor 24 by annular lips 34, 36, 38, 40 and lip sections 56.

**Claims**

1. A collector (10) for use in a chemical process tower (12) comprising a plurality of annular segments (26, 28, 30, 32) which are adjustably connected together at their ends to form a horizontally-oriented segmented ring with gaps between the ends of adjacent annular segments, said annular segments being flexible and having a radius of curvature which is less than the radius of a circle circumscribing the collector; adjusting means (42, 44, 46, 48, 52, 54) connecting two adjacent annular segments (26, 28, 30, 32) for spreading said annular segments apart to expand the diameter of the ring formed by the segments (26, 28, 30, 32) sufficiently to form a seal between said annular segments (26, 28, 30, 32) and the internal surface of a tower wall (13), a lip (34, 36, 38, 40) on each of said annular segments (26, 28, 30, 32) extending radially inwardly from the annular segment at an angle from a vertical direction and for a sufficient distance to divert liquid flowing down the tower wall (13) to a desired area within the tower (12) and a plurality of bridging lip sections (56) being provided for preventing leakage of liquid down a tower wall through the gaps (50) between the annular sections (26, 28, 30, 32) when they are expanded apart in a tower (12).

2. The collector of claim 1, characterized in that the annular segments (26, 28, 30, 32) are vertically oriented sheets of metal which have the shape of a right-circular cylindrical segment.

3. The collector of claim 1, characterized in that the annular segments (26, 28, 30, 32) have a radius of curvature which is no less than about 75% of the radius of a circle circumscribing the collector.

4. The collector of claim 1, characterized in that the unstressed radius of curvature of the annular segments (26, 28, 30, 32) is not less than about 90% of the radius of a circle circumscribing the collector.

5. The collector of claim 1, characterized in that the unstressed radius of curvature of the annular segments (26, 28, 30, 32) is no less than about 94% of the radius of a circle circumscribing the collector.

6. The collector of claim 1, 2 or 3, characterized in that the ring diameter adjusting means (42, 44, 46, 48, 52, 54) is adapted to spread the annular segments (26, 28, 30, 32) apart, and is also adapted to pull together the annular segments to loosen the segments from a tower wall (13) for removal of the flow collector (10) from the tower (12).

7. The collector of claim 6 including a ring diameter adjusting means (42, 44, 46, 48, 52, 54) connecting the adjacent ends of each annular segments (26, 28, 30, 32) of the horizontal ring.

8. The collector of claim 1, characterized in that the lip (34, 36, 38, 40) extends from each annular segment (26, 28, 30, 32) at the same acute angle from the vertical direction, with each lip (34, 36, 38, 40) being attached to its corresponding annular segment (26, 28, 30, 32) at the same height so that the several lips (34, 36, 38, 40) lie in the surface of a frustum of an imaginary inverted right circular cone whose base passes through each of said annular segments (26, 28, 30, 32) at that same horizontal level at which said lips (34, 36, 38, 40) are attached to said annular segments (26, 28, 30, 32).

9. The collector of any one of the preceding claims wherein each of said bridging lip sections (56) is sealably and fixedly attached to the end of one of each pair of the ends of annular sections (26, 28, 30, 32) in near abutment to each other within said segmented ring (10), said bridging lip sections (56) extending so far from their annular section that said lip sections (56) and lips (34, 36, 38, 40) of adjacent annular sections are in mutually overlapping relationship while also contacting the tower wall (13) in the gaps (50) between the adjacent pairs of annular sections (26, 28, 30, 32) and extending radially inward from the tower wall (13) sufficiently to direct the liquid flow to a desired area within the tower (12).

10. The collector of claims 1, 2 or 3, characterized in that the lips (34, 36, 38, 40) of each annular segment (26, 28, 30, 32) is attached to the bottom of the segment (26, 28, 30, 32), each lip (34, 36, 38, 40) following the curved contour of its corresponding segment, and each lip (34, 36, 38, 40) being of the same arc length as the annular segment (26, 28, 30, 32); and including a ring diameter adjusting means (42, 44, 46, 48, 52, 54) for connecting the ends of each pair of annular segments (26, 28, 30, 32) of the ring (10) for spreading apart the annular segments (26, 28, 30, 32) until they form a liquid-tight seal against a tower wall (13) and a friction joint with the tower wall (13), or for pulling the annular segments (26, 28, 30, 32) together for releasing the frictional engagement of the annular segments (26, 28, 30, 32) from the tower wall (13) for removal of the segments from said tower (12); and a bridging lip section (56) fixedly attached to the bottom of the lip (34, 36, 38, 40) of one of two ends of each pair of adjacent annular segment (26, 28, 30, 32) ends to extend across the gap (50) between the pairs of adjacent annular segments (26, 28, 30, 32) and under the lip (34, 36, 38, 40) to which it is not attached to maintain a continuous sealing contact with the tower wall (13) in the gap (50) between the annular segments (26, 28, 30, 32).

**Patentansprüche**

1. Kollektor (10) für einen chemischen Verfahrensturm (12), dadurch gekennzeichnet,

daß er mehrere Ringsegmente (26, 28, 30, 32) umfaßt, welche über ihre Enden verstellbar miteinander verbunden sind, so daß sie einen horizontal angeordneten Segmentring mit zwischen den Enden jeweils benachbarter Ringsegmente verbleibenden Lücken bilden, wobei die Ringsegmente flexibel sind und einen Krümmungsradius aufweisen, der kleiner als der Radius eines dem Kollektor umbeschriebenen Kreises ist,

daß Verstellmittel (42, 44, 46, 48, 52, 54) zum Verbinden zweier benachbarter Ringsegmente (26, 28, 30, 32) vorgesehen sind, welche so ausgebildet sind, daß sie diese Ringsegmente auseinanderspreizen, um den Durchmesser des durch die Segmente (26, 28, 30, 32) gebildeten Ringes genügend zu vergrößern, daß eine Abdichtung zwischen diesen Ringsegmente (26, 28, 30, 32) und der Innenfläche der Turmwand (13) gebildet wird,

daß an jedem der Ringsegmente (26, 28, 30, 32) eine Lippe (34, 36, 38, 40) angeordnet ist, die sich von dem Ringsegment in einem Winkel zu einer vertikalen Richtung und mit einem ausreichenden Abstand nach innen erstreckt, daß an der Turmwand (13) nach unten strömende Flüssigkeit in einen gewünschten Bereich innerhalb des Turmes (12) gelenkt wird,

und daß mehrere Überbrückungs-Lippensegmente (56) vorgesehen sind, welche verhindern sollen, daß ein Durchtreten von Flüssigkeit entlang der Turmwand nach unten durch die Lücken (50) zwischen den Ringsegmenten (26, 28, 30, 32) erfolgt, wenn diese im Turm (12) auseinandergespreizt sind.

2. Kollektor nach Anspruch 1, dadurch gekennzeichnet, daß die Ringsegmente (26, 28, 30, 32) aus vertikal stehenden Blechstreifen bestehen, welche jeweils die Form eines rechtwinkligen Zylindersegmentes haben.

3. Kollektor nach Anspruch 1, dadurch gekennzeichnet, daß die Ringsegmente (26, 28, 30, 32) einen Krümmungsradius haben, welcher nicht kleiner als etwa 75% des Radius eines dem Kollektor umbeschriebenen Kreises ist.

4. Kollektor nach Anspruch 1, dadurch gekennzeichnet, daß der Krümmungsradius des Ringsegmente (26, 28, 30, 32) ohne Belastung nicht kleiner als etwa 90% des Radius eines dem Kollektor umbeschriebenen Kreises ist.

5. Kollektor nach Anspruch 1, dadurch gekennzeichnet, daß der Krümmungsradius der Ringsegmente (26, 28, 30, 32) ohne Belastung nicht kleiner als etwa 94% des Radius eines dem Kollektor umbeschriebenen Kreises ist.

6. Kollektor nach einem der Ansprüche 1 bis 3, dadurch gekennzeichnet, daß die Verstellmittel (42, 44, 46, 48, 52, 54) für den Ringdurchmesser so ausgebildet sind, daß sie die Ringsegmente (26, 28, 30, 32) auseinanderspreizen und die Ringsegmente zusammenziehen können, um diese von der Turmwand zu lösen, um den Strömungskollektor aus dem Turm (12) entfernen zu können.

7. Kollektor nach Anspruch 6, dadurch gekennzeichnet, daß Verstellmittel (42, 44, 46, 48, 52, 54) für den Ringdurchmesser vorgesehen sind, die jeweils die benachbarten Enden der Ringsegmente (26, 28, 30, 32) des horizontalen Ringes miteinander verbinden.

8. Kollektor nach Anspruch 1, dadurch gekennzeichnet, daß die Lippen (34, 36, 38, 40) jeweils von jedem Ringsegment (26, 28, 30, 32) im gleichen spitzen Winkel zur Vertikalrichtung abstehen, wobei jede Lippe (34, 36, 38, 40) an dem zugeordneten Ringsegment (26, 28, 30, 32) in der gleichen Höhe angeordnet ist, so daß die verschiedenen Lippen (34, 36, 38, 40) jeweils auf der Fläche eines imaginären, umgekehrten, rechtwinkligen Kegelstumpfabschnittes liegt, dessen Basis jeweils in der gleichen Horizontalebene durch die Ringsegmente (26, 28, 30, 32) verläuft, in der die Lippen (34, 36, 38, 40) an diesen Ringsegmenten (26, 28, 30, 32) befestigt sind.

9. Kollektor nach einem vorstehenden Ansprüche, dadurch gekennzeichnet, daß jedes der Überbrückungs-Lippensegmente (56) abdichtend und fest jeweils mit einem Ende eines Endenpaares von im Segmentring nahe beieinander liegenden Ringsegmenten (26, 28, 30, 32) verbunden ist, wobei die Überbrückungs-Lippensegmente (56) jeweils von ihren Ringsegmenten aus soweit abstehen, daß diese Lippensegmente (56) und die Lippen (34, 36, 38, 40) benachbarter Ringsegmente sich gegenseitig überlappen, gleichzeitig die Turmwand (13) in den Lücken (50) zwischen je zwei benachbarten Ringsegmenten (26, 28, 30, 32) berühren und von der Turmwand (13) radial nach innen soweit abstehen, daß sie den Flüssigkeitsstrom in einen gewünschten Bereich innerhalb des Turmes lenken.

10. Kollektor nach einem der Ansprüche 1, 2 oder 3, dadurch gekennzeichnet,

daß die Lippe (34, 36, 38, 40) jedes Ringsegmentes (26, 28, 30, 32) am Boden des Segmentes (26, 28, 30, 32) angebracht ist, wobei jede Lippe (34, 36, 38, 40) der Kurvenkontur des zugeordneten Segmentes folgt und wobei jede Lippe (34, 36, 38, 40) die gleiche Bogenlänge wie das Ringsegment (26, 28, 30, 32) hat,

daß Ringdurchmesser-Verstellmittel (42, 44, 46, 48, 52, 54) zum Verbinden der Enden jeweils zweier Ringsegmente (26, 28, 30, 32) des Ringes (10) vorgesehen sind zum Auseinanderspreizen der Ringsegmente (26, 28, 30, 32), bis diese eine flüssigkeitsdichte Abdichtung und eine reibschlüssige Verbindung zur Turmwand (13) aufweisen, oder zum Zusammenziehen der Ringsegmente (26, 28, 30, 32), um auf diese Weise die reibschlüssige Verbindung der Ringsegmente (26, 28, 30, 32) zur Turmwand (13) zu lösen und diese Segmente aus dem Turm entfernen zu können,

und daß ein Überbrückungs-Lippensegment (56) fest an der Unterseite der Lippe (34, 36, 38, 40) eines von zwei Enden jeweils eines Endenpaares benachbarter Ringsegmente (26, 28, 30, 32) angebracht ist, welches sich über die Lücke (50) zwischen jeweils zwei benachbarten Ringsegmenten (26, 28, 30, 32) bis unter die Lippe (34, 36, 38, 40), an der es nicht befestigt ist, erstreckt, um eine geschlossene Abdichtung mit der Turmwand (13) in der Lücke (50) zwischen den Ringsegmenten (26, 28, 30, 32) zu bilden.

## Revendications

1. Collecteur (10) destiné à être utilisé dans une tour (12) de procédé chimique comprenant une pluralité de segments annulaires (26, 28, 30, 32) reliés entre eux de manière réglable à leurs extrémités de manière à former une couronne segmentée et orientée horizontalement, avec des intervalles entre les extrémités des segments annulaires contigus, ces segments annulaires étant flexibles et présentant un rayon de courbure qui est inférieur au rayon d'un cercle circonscrit au collecteur; des moyens (42, 44, 46, 48, 52, 54) de réglage reliant deux segments annulaires contigus (26, 28, 30, 32) afin d'écarter ces segments annulaires et augmenter suffisamment le diamètre de la couronne formée par les segments (26, 28, 30, 32) pour-constituer un joint étanche entre ces segments annulaires (26, 28, 30, 32) et la surface intérieure d'une paroi (13) de la tour, un bec (34, 36, 38, 40) sur chacun des segments annulaires (26, 28, 30, 32) se prolongeant radialement vers l'intérieur à partir du segment annulaire en formant un angle par rapport à la verticale et sur une distance suffisante pour dévier le liquide descendant le long de la paroi (13) de la tour vers une région désirée de la tour (12), et une pluralité d'éléments (56) de bec de liaison étant prévus pour empêcher des fuites de liquide vers le bas le long de la paroi de la tour à travers les intervalles (50) formés entre les segments annulaires (26, 28, 30, 32) lorsque ceux-ci sont écartés dans une tour (12).

2. Collecteur suivant la revendication 1, caractérisé en ce que les segments annulaires (26, 28, 30, 32) sont des tôles métalliques orientées verticalement et qui ont la forme de segments cylindriques circulaires droits.

3. Collecteur suivant la revendication 1, caractérisé en ce que les segments annulaires (26, 28, 30, 32) présentent un rayon de courbure qui est égal ou supérieur à 75 % environ du rayon d'un cercle circonscrit au collecteur.

4. Collecteur suivant la revendication 1, caractérisé en ce que le rayon de courbure des segments annulaires (26, 28, 30, 32) en l'absence de contraintes est égal ou supérieur à 90 % environ du rayon d'un cercle circonscrit au collecteur.

5. Collecteur suivant la revendication 1, caractérisé en ce que le rayon de courbure des segments annulaires (26, 28, 30, 32) en l'absence de contraintes est égal ou supérieur à 94 % environ du rayon d'un cercle circonscrit au collecteur.

6. Collecteur suivant l'une des revendications 1, 2 ou 3, caractérisé en ce que les moyens (42, 44, 46, 48, 52, 54) de réglage du diamètre de la couronne sont prévus pour écarter les segments annulaires (26, 28, 30, 32) et sont prévus également pour rapprocher les segments annulaires afin de les décoller de la paroi (13) de la tour pour que le collecteur (10) d'écoulement puisse être retiré de la tour (12).

7. Collecteur suivant la revendication 6, comprenant des moyens (42, 44, 46, 48, 52, 54) de réglage du diamètre de la couronne, qui relient les extrémités contiguës de chaque segment annulaire (26, 28, 30, 32) de la couronne horizontale.

8. Collecteur suivant la revendication 1, caractérisé en ce que le bec (34, 36, 38, 40) se prolonge depuis chaque segment annulaire (26, 28, 30, 32) en formant le même angle aigu avec la verticale, chaque bec (34, 36, 38, 40) étant fixé à son segment annulaire correspondant (26, 28, 30, 32) à la même hauteur, de sorte que les multiples becs (34, 36, 38, 40) constituent la surface d'un tronc de cône circulaire, droit, inversé, imaginaire, dont la base passe par chacun des segments annulaires (26, 28, 30, 32) au même niveau horizontal que celui auquel les becs (34, 36, 38, 40) sont fixés à ces segments annulaires (26, 28, 30, 32).

9. Collecteur suivant l'une quelconque des revendications précédentes, dans lequel chacun des éléments (56) de bec de liaison est fixé de manière étanche à l'extrémité de chacune des paires d'extrémités des segments annulaires (26, 28, 30, 32) aboutissant l'une près de l'autre dans la couronne segmentée (10), les éléments (56) de bec de liaison se prolongeant depuis leur segment annulaire sur une distance telle que ces éléments (56) de bec et les becs (34, 36, 38, 40) des segments annulaires correspondants se recouvrent tout en étant également en contact avec la paroi (13) de la tour dans les intervalles (50) formés entre les parois contiguës de segments annulaires (26, 28, 30, 32) et en se prolongeant radialement vers l'intérieur à partir de la paroi (13) de la tour suffisamment pour diriger l'écoulement liquide vers une région désirée de la tour (12).

10. Collecteur suivant les revendications 1, 2 ou 3, caractérisé en ce que le bec (34, 36, 38, 40) de chaque segment annulaire (26, 28, 30, 32) est fixé au bas du segment (26, 28, 30, 32), chaque bec (34, 36, 38, 40) suivant le contour incurvé de son segment correspondant, et chaque bec (34, 36, 38, 40) ayant la même longueur d'arc que le segment annulaire (26, 28, 30, 32); et comprenant des moyens (42, 44, 46, 48, 52, 54) de réglage du diamètre de la couronne pour relier les extrémités de chaque paire de segments annulaires (26, 28, 30, 32) de la couronne (10) afin d'écarter ces segments annulaires (26, 28, 30, 32) jusqu'à ce qu'ils forment un joint étanche aux liquides contre une paroi (13) de la tour et un assemblage à friction avec cette paroi (13) de la tour, ou afin de rapprocher les segments annulaires (26, 28, 30, 32) pour décoller de la paroi (13) de la tour l'assemblage à friction des segments annulaires (26, 28, 30, 32) afin de pouvoir retirer les segments de la tour (12); et un élément (56) de bec de liaison fixé au bas du bec (34, 36, 38, 40) de l'une des deux extrémités de chaque paire d'extrémités de segments annulaires contigus (26, 28, 30, 32) de manière à se prolonger de part et d'autre de l'intervalle (50) formé entre les paires de segments annulaires contigus (26, 28, 30, 32) et sous le bec (34, 36, 38, 40) auquel il n'est pas fixé de manière à maintenir un contact étanche continu avec la paroi (13) de la tour dans l'intervalle (50) formé entre les segments annulaires (26, 28, 39, 32).

FIG. 1

FIG. 2

FIG. 3

FIG. 4